# EUROPÄISCHE PATENTSCHRIFT

(11) **EP 1 245 873 B1**
(45) Veröffentlichungstag und Bekanntmachung des Hinweises auf die Patenterteilung: **23.11.2005**
(21) Anmeldenummer: 02006463.0
(22) Anmeldetag: 22.03.2002
(51) Int. Cl.: F16J 15/32

(54) **Dichtring**
Sealing ring
Joint d'étanchéité

(30) Priorität: 27.03.2001 DE 10115130; 15.02.2002 DE 10206624
(43) Veröffentlichungstag der Anmeldung: 02.10.2002
(73) Patentinhaber: Carl Freudenberg KG, 69469 Weinheim (DE)
(72) Erfinder: Devouassoux, Serge, 52200 Langres (FR); Kammerer, Eric, 52200 Langres (FR); Pataille, Gilbert, 52200 Corlee (FR)

(56) Entgegenhaltungen:
- EP-A- 1 024 318
- WO-A-00/79157
- US-A- 5 183 271

## Beschreibung

Die Erfindung bezieht sich auf einen Dichtring, welcher eine Dichtmanschnette aus polymerem Werkstoff umfaßt.

Aus WO 00 79157 A bzw. EP 1 227 271 A1 ist eine Hochdruck-Wellendichtung bekannt, welche ein metallisches, ringförmiges, äußeres Gehäuse umfaßt, welches in einer Montagebohrung des Gehäuses eingesetzt ist, sowie einen metallischen, inneren Ring, eine als Hochdruckgasbarriere dienende, ringförmige Dichtlippe aus "Nylon" (Polyamid), eine Schicht mit niederer Reibung, welche die Hochdruckseite der Dichtlippe abdeckt und aus PTFE hergestellt ist, einen Versteifungsring und einen Haltering umfaßt. Auf der abzudichtenden Fläche der der Welle abgewandten Seite dieser Dichtung ist jeweils eine ringförmige Dichtlippe vorgesehen, welche als Hochdruckgassperre dient und aus "Nylon" (Polyamid) besteht.

Aus DE 34 02 366 A1ist nach Figur 10 eine Dichtmanschette bekannt, welche aus einem thermoplastischen Material besteht und zunächst scheibenförmig ausgebildet ist. Die Scheibe wird radial von innen über einen Teil ihrer Breite gespalten, und vor der Befestigung der Scheibe an einem Stützring werden die so gebildeten Scheibenteile entgegengesetzt zueinander gebogen. Die Scheibenteile bilden Dichtlippen. Eine der Dichtlippen wird durch eine Ringwendelfeder auf die abzudichtende Fläche eines Maschinenelements gedrückt. Die Halterung der Ringwendelfeder wird durch einen Überzug auf der Dichtlippe gebildet, der aus einem elastomeren Werkstoff besteht. Der Überzug hat ausschließlich die Aufgabe, als eine Halterung für die Ringwendelfeder zu dienen.

Der Erfindung liegt die Aufgabe zugrunde, einen Dichtring bereitzustellen, welcher ein gutes Abdichtungsergebnis eines abzudichtenden Maschinenelements auch dann gestattet, wenn die Dichtmanschette an das Maschinenelement besonders anschmiegsam ist und deshalb nur eine geringe Dicke aufweist und/oder aus einem porösen Werkstoff besteht.

Nach der Erfindung wird hierzu eine Dichtung bereitgestellt, deren Merkmale im Patentanspruch 1 angegeben sind. Auf vorteilhafte Ausgestaltungen nehmen die Unteransprüche Bezug.

Wesentlich bei der erfindungsgemäßen Dichtung ist die Tatsache, daß die Dicke der Dichtmanschette höchstens 0,6 mm beträgt, die Dicke der Versiegelung 0,005 bis 0,3 mm beträgt, und die Dicke der Versiegelung maximal halb so groß wie die Dicke der Dichtmanschette ist. Durch die geringe Dicke der Dichtmanschette kann sich diese besonders gut an das abzudichtende Maschinenelement anschmiegen. Durch die gute Beweglichkeit/Flexibilität der dünnen Dichtmanschette vermag diese Unwuchten und/oder Unrundheiten des abzudichtenden Maschinenelements ausgezeichnet zu folgen. Es ist daher stets eine gute Abdichtung gegeben. Ohne eine Versiegelung wären die Gebrauchseigenschaften des Dichtrings insgesamt wenig zufrieden stellend, da abhängig vom Werkstoff, aus dem die Dichtmanschette besteht, mehr oder weniger viel abzudichtendes Medium durch die dünne Dichtmanschette in Richtung der Umgebung diffundiert. Die Diffusion ist insbesondere bei Dichtmanschetten aus PTFE-Compounds zu beobachten. Zur Erzielung guter Abdichtergebnisse ohne Versiegelung müßte die Dichtmanschette eine wesentlich größere Dicke aufweisen, wäre dann jedoch nicht ausreichend flexibel. Durch die Kombination aus dünner Dichtmanschette und Versiegelung kann sich die Dichtmanschette gut an das abzudichtende Maschinenelement anschmiegen, und dank der Versiegelung erhält man auch gute Abdichtungsergebnisse trotz geringer Materialstärke der Dichtmanschette. Durch die maximal halb so große Dicke bezogen auf die Dichtmanschette hat die Versiegelung nur einen vernachlässigbar geringen Einfluß auf die Flexibilität der Dichtmanschette, bewirkt jedoch, daß das abzudichtende Medium nicht durch die dünne Dichtmanschette hindurch in Richtung zur Umgebung gelangen kann. Hierbei beträgt das Verhältnis aus der

Dicke der Dichtmanschette zu der Dicke der Versiegelung 2 bis 120 und vorzugsweise zumindest 10. Um die Flexibilität der Dichtmanschette und ihre Gebrauchseigenschaften möglichst wenig zu beeinflussen ist die Dicke der Versiegelung so klein wie möglich zu wählen, wobei jedoch die zuverlässige Abdichtung der Porosität der Dichtmanschette gewährleistet sein muß. Für die meisten Materialpaarungen DichtmanschetteNersiegelung ist es ausreichend, wenn das Verhältnis aus der Dicke der Dichtmanschette zur Dicke der Versiegelung größer als 10 ist. Bevorzugt beträgt die Dicke der Versiegelung 0,01 bis 0,1 mm, wobei die Dicke der Dichtmanschette sich auf höchstens 0,5 mm belaufen kann. Diese Abmessungen haben sich als besonders vorteilhaft hinsichtlich einer guten Flexibilität der Dichtmanschette und eines guten Abdichtergebnisses während einer langen Gebrauchsdauer bewährt. Trotz der guten Flexibilität der Dichtmanschnette ist durch die Versiegelung eine Leckage durch die Dichtmanschette hindurch in Richtung der Umgebung ausgeschlossen.

Die Dichtmanschette kann aus PTFE bestehen. Hierbei ist von Vorteil, dass Dichtmanschetten aus PTFE ausgezeichnete Notlaufeigenschaften aufweisen, auch dann, wenn eine zusätzliche Schmierung, beispielsweise durch das abzudichtende Medium, ausfällt. Außerdem sind Dichtmanschetten aus PTFE im Vergleich zu Dichtmanschetten aus elastomeren Werkstoffen, vergleichsweise verschleißfest. Nach einem vernachlässigbar geringen Anfangsverschleiß glasiert die Oberfläche von PTFE und ist anschließend äußerst widerstandsfähig gegen abrasiven Verschleiß. Außerdem hat PTFE den Vorteil, dass es gegen die meisten abzudichtenden Medien resistent ist.

Die Versiegelung besteht bevorzugt aus einem polymeren Werkstoff. Durch die, bezogen auf die Dichtmanschette, sehr geringe Dicke der Versiegelung und die daraus resultierende sehr gute Flexibilität werden die Gebrauchseigenschaften der Dichtmanschette nicht nachteilig beeinflusst. Die Porosität der Dichtmanschette wird trotzdem zuverlässig abgedichtet.

Die Dichtmanschette kann mittels einer Zwischenschicht mit einem Stützring aus zähhartem Werkstoff verbunden sein. Durch die Zwischenschicht besteht beispielsweise die Möglichkeit, die Dichtmanschette schwingungsentkoppelt am Stützring zu befestigen. Auch Werkstoffe für die Dichtmanschette, die sich nur schlecht oder gar nicht unmittelbar am Stützring befestigen lassen, können mittels der Zwischenschicht mit dem Stützring verbunden werden.

Bevorzugt sind die Versiegelung und die Zwischenschicht einstückig ineinander übergehend und materialeinheitlich ausgebildet, wobei sowohl die Versiegelung als auch die Zwischenschicht bevorzugt aus einem elastomeren Werkstoff bestehen. Durch die einstückig ineinander übergehende Ausgestaltung der Versiegelung mit der Zwischenschicht ist der Dichtring einfach und kostengünstig herstellbar. Der Dichtring weist einen teilearmen Aufbau auf.

Die Dichtmanschette kann entgegen dem abzudichtenden Raum in Richtung der Umgebung vorgewölbt sein. Hierbei ist von Vorteil, dass die Versiegelung während der bestimmungsgemäßen Verwendung des Dichtrings nicht mit abzudichtendem Medium in Berührung kommt. Hinsichtlich einer geeigneten Werkstoffauswahl für die Versiegelung ist dies von hervorzuhebendem Vorteil. Das einzige Kriterium, das für die Auswahl des Versiegelungs-Werkstoffs dann entscheidend ist, ist die Abdichtung der Dichtmanschette auf der dem Maschinenelement abgewandten Seite. Eine Verträglichkeit mit dem abzudichtenden Medium ist nicht unbedingt erforderlich.

Die Dichtmanschette und die Versiegelung können auf ihren einander zugewandten Seiten jeweils eine Oberflächenprofilierung aufweisen. Die Oberflächenprofilierung von Dichtmanschette und Versiegelung können kongruent gestaltet sein. Durch die Oberflächenprofilierungen kann die Verbindung zwischen der Dichtmanschette und der Versiegelung besonders haltbar ausgeführt sein. Bevorzugt wird die Versiegelung mit der Oberfläche der Dichtmanschette adhäsiv verbunden. Die Verbindung zwischen der Versiegelung und der Dichtmanschette ist in jedem Fall flüssigkeitsdicht. Durch die kongruente Gestalt der Oberflächenprofilierungen ist die korrekte Positionierung von Versiegelung und Dichtmanschette zueinander, vor ihrer abschließenden Verbindung, wesentlich vereinfacht. Die lagerichtige Zuordnung ergibt sich durch die Oberflächenprofilierung nahezu von selbst, so dass Montagefehler bei der Herstellung des Dichtrings auf ein Minimum begrenzt sind.

Die Oberflächenprofilierungen haben weiterhin den Vorteil, dass sich zusätzlich zu der stoffschlüssigen adhäsiven Verbindung ein Formschluss zwischen der Versiegelung und der Dichtmanschette ergibt, der eine dauerhaltbare Verbindung auch bei einer dynamisch stärker beanspruchten Dichtmanschette begünstigt.

Die Versiegelung kann auf der der Dichtmanschette abgewandten Seite eine, im Längsschnitt betrachtet, im Wesentlichen wellenförmige Oberflächenprofilierung aufweisen. Zusätzlich oder alternativ besteht die Möglichkeit, dass die Dichtmanschette auf der der abzudichtenden Fläche zugewandten Seite einen in Richtung des abzudichtenden Raums wirksamen Rückförderdrall aufweist. Die Oberflächenprofilierung auf der der Dichtmanschette abgewandten Seite der Versiegelung erhöht die Flexibilität des Verbunds, bestehend aus Dichtmanschette und Versiegelung. Außerdem ergibt sich durch die wellenförmige Oberflächenprofilierung eine relativ vergrößerte Oberfläche für eine verbesserte Wärmeabfuhr, was speziell dann, wenn der beanspruchte Dichtring in Kraftfahrzeugen zur Anwendung gelangt, vorteilhaft ist; eine übermäßige, die Gebrauchsdauer verringernde Wärmebelastung wird durch die wellenförmige Oberflächenprofilierung ausgeschlossen.

Der Rückförderdrall bewirkt eine Rückförderung des abzudichtenden Mediums in Richtung des abzudichtenden Raums und verhindert eine Leckage. Zusätzlich bewirkt das unter der Dichtmanschette befindliche abzudichtende Medium eine Schmierung der Dichtmanschette und daraus resultierend gleichbleibend gute Gebrauchseigenschaften während einer langen Gebrauchsdauer.

Die Versiegelung kann die Stirnseite der in axialer Richtung vorgewölbten Dichtmanschette überdecken, wobei die Überdeckung die abzudichtende Fläche unter radialer Vorspannung anliegend umschließt. Gelangt eine derartige Überdeckung der Stirnseite der Dichtmanschette zur Anwendung, wird nicht nur eine Diffusion des abzudichtenden Mediums im Wesentlichen in radialer Richtung durch die in axialer Richtung vorgewölbte Dichtlippe, von der abzudichtenden Fläche des Maschinenelements in Richtung der Umgebung verhindert, sondern auch eine Diffusion parallel zur abzudichtenden Fläche durch die Dichtlippe hindurch in Richtung der Umgebung. Die Überdeckung ist ein Bestandteil der Versiegelung, wobei die Verbindung zwischen der Überdeckung und der Stirnseite der Dichtmanschette flüssigkeitsdicht ist.

Die der abzudichtenden Fläche zugewandte Seite der Überdeckung kann, ebenso wie die anderen freien Oberflächen der Überdeckung, profiliert sein, um beispielsweise die zuvor bereits erwähnten Vorteile zu erzielen.

Die axiale Erstreckung der Überdeckung kann 0,005 bis 0,3 mm betragen, wobei die axiale Erstreckung der Überdeckung bevorzugt der Dicke der Versiegelung entspricht. Durch die nur geringe Dicke der Überdeckung hat diese nur einen vernachlässigbar geringen Einfluss auf die Flexibilität des beanspruchten Dichtrings, so dass sich dieser, wie zuvor bereits beschrieben, besonders gut an das abzudichtende Maschinenelement anschmiegt und außerdem eine unerwünschte Diffusion des abzudichtenden Mediums durch die Dichtmanschette hindurch in die Umgebung verhindert wird.

Entspricht die axiale Erstreckung der Überdeckung der Dicke der Versiegelung, ist der Dichtring im Bereich seiner Versiegelung/Überdeckung frei von sprunghaften Änderungen der Materialdicke. Die Herstellung eines solchen Dichtrings, insbesondere die Verbindung der Versiegelung/Überdeckung mit der Dichtmanschette, ist dadurch besonders einfach möglich.

### Kurzbeschreibung der Zeichnung

Sieben Ausführungsbeispiele des erfindungsgemäßen Dichtrings werden nachfolgend anhand der Figuren 1 bis 7 näher erläutet.

Diese zeigen jeweils in schematischer Darstellung:
- Figur 1: ein erstes Ausführungsbeispiel, bei dem die Dichtmanschette nur auf der dem abzudichtenden Maschinenelement zugewandten Seite eine Oberflächenprofilierung in Form eines Rückförderdralls aufweist,
- Figur 2: ein zweites Ausführungsbeispiel, ähnlich dem Ausführungsbeispiel aus Figur 1, wobei sowohl die Dichtmanschette als auch die Versiegelung auf den einander zugewandten Seiten zusätzlich jeweils eine Oberflächenprofilierung aufweisen,
- Figur 3: ein drittes Ausführungsbeispiel, ähnlich dem Ausführungsbeispiel aus Figur 1, wobei die Versiegelung zusätzlich auf der der Dichtmanschette abgewandten Seite eine wellenförmige Oberflächenprofilierung aufweist,
- Figur 4: ein viertes Ausführungsbeispiel, ähnlich dem Ausführungsbeispiel aus Figur 2, wobei die Versiegelung zusätzlich auf der der Dichtmanschette abgewandten Seite eine wellenförmige Oberflächenprofilierung aufweist,
- Figur 5: ein fünftes Ausführungsbeispiel, ähnlich dem Ausführungsbeispiel aus Figur 1, wobei die Einheit, bestehend aus Dichtmanschette und Versiegelung in Richtung der Umgebung vorgewölbt ist,
- Figur 6: ein sechstes Ausführungsbeispiel, ähnlich dem Ausführungsbeispiel aus Figur 5,
- Figur 7: ein siebtes Ausführungsbeispiel, das im Wesentlichen dem Ausführungsbeispiel aus Figur 6 entspricht, bei dem die Stirnseite der in axialer Richtung vorgewölbten Dichtmanschette jedoch von einer Überdeckung überdeckt ist, die die abzudichtende Fläche unter radialer Vorspannung anliegend umschließt.

### Ausführung der Erfindung

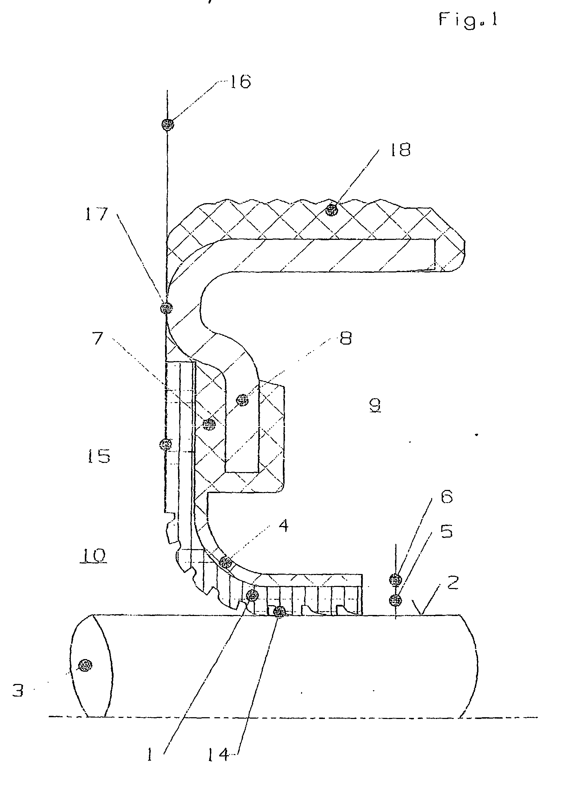

Die Figuren 1 bis 7 zeigen jeweils ein Ausführungsbeispiel eines Dichtrings. Der Dichtring besteht in den hier gezeigten Ausführungsbeispielen jeweils aus einem Stützring 8, an dem eine Einheit, bestehend aus Dichtmanschette 1 und Versiegelung 4 festgelegt ist. Die Dichtmanschette 1 besteht in den Ausführungsbeispielen jeweils aus einem PTFE-Compound und weist eine Dicke auf, die höchstens 0,6 mm beträgt. Auf der dem Maschinenelement 3 abgewandten Seite der Dichtmanschette 1 ist eine Versiegelung 4 angeordnet, die in den hier gezeigten Ausführungsbeispielen jeweils aus einem polymeren Werkstoff besteht, wobei das Verhältnis aus der Dicke 5 der Dichtmanschette 1 zur Dicke 6 der Versiegelung 4 zumindest 10 beträgt. In den hier gezeigten Ausführungsbeispielen beträgt die Dicke 6 der Versiegelung 4 0,05 mm.

In Figur 1 ist ein erstes Ausführungsbeispiel eines Dichtrings gezeigt. Die Einheit, bestehend aus Dichtmanschette 1 und Versiegelung 4 ist in Richtung des abzudichtenden Raums 9 vorgewölbt und umschließt das Maschinenelement 3, das in diesem Ausführungsbeispiel als Welle ausgebildet ist, außenumfangsseitig mit radialer Vorspannung anliegend. Die Stirnseite 15 der Dichtmanschette 1 ist in einer Radialebene 16 mit der Stirnseite 17 des Stützrings 8 angeordnet, so dass der hier gezeigte Dichtring besonders kompakte Abmessungen in axialer Richtung aufweist. Der Stützring 8 besteht in diesem Ausführungsbeispiel aus einem tiefgezogenen Blech, an das radial außenseitig eine statisch beanspruchte Dichtung 18 anvulkanisiert ist. Mittels der Zwischenschicht 7, die aus einem polymeren Werkstoff besteht, ist die Dichtmanschette 1 mit dem Stützring 8 verbunden, wobei die Zwischenschicht 7 einstückig ineinander übergehend und materialeinheitlich mit der Versiegelung 4 ausgebildet ist. Die Versiegelung 4 bewirkt, wie in den übrigen Ausführungsbeispielen auch, dass abzudichtendes Medium aus dem abzudichtenden Raum 9 nicht durch den Werkstoff der Dichtmanschette 1 in Richtung Umgebung 10 gelangt.

Die Versiegelung 4 und die Dichtmanschette 1 sind im Bereich ihrer einander zugewandten Oberflächen flüssigkeitsdicht miteinander adhäsiv verbunden.

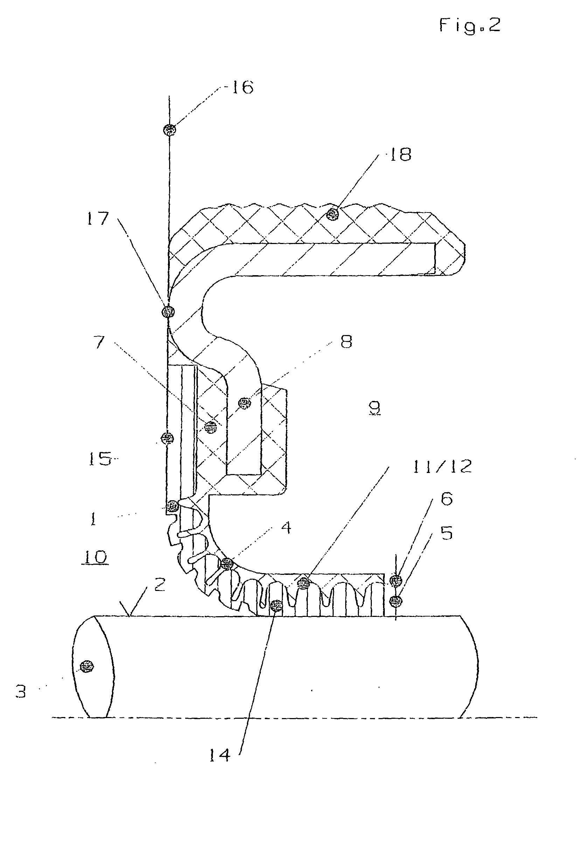

In Figur 2 ist ein zweites Ausführungsbeispiel gezeigt, ähnlich dem Ausführungsbeispiel aus Figur 1. Das Ausführungsbeispiel aus Figur 2 unterscheidet sich vom Ausführungsbeispiel aus Figur 1 dadurch, dass die Dichtmanschette 1 und die Versiegelung 4 auf ihren einander zugewandten Oberflächen jeweils zusätzlich eine Oberflächenprofilierung 11, 12 aufweisen, die kongruent zueinander gestaltet sind. Dadurch, dass die Berührungsflächen von Dichtmanschette und Versiegelung durch die Oberflächenprofilierungen 11, 12 vergrößert sind, ergibt sich eine verbesserte Haltbarkeit der Verbindung zwischen Dichtmanschette 1 und Versiegelung 4. Die verbesserte Haltbarkeit der Verbindung resultiert nicht nur aus der vergrößerten Oberfläche zum adhäsiven Verbinden von Dichtmanschette 1 und Versiegelung 4 miteinander, sondern auch aus der formschlüssigen Positionierung der beiden Teile aneinander.

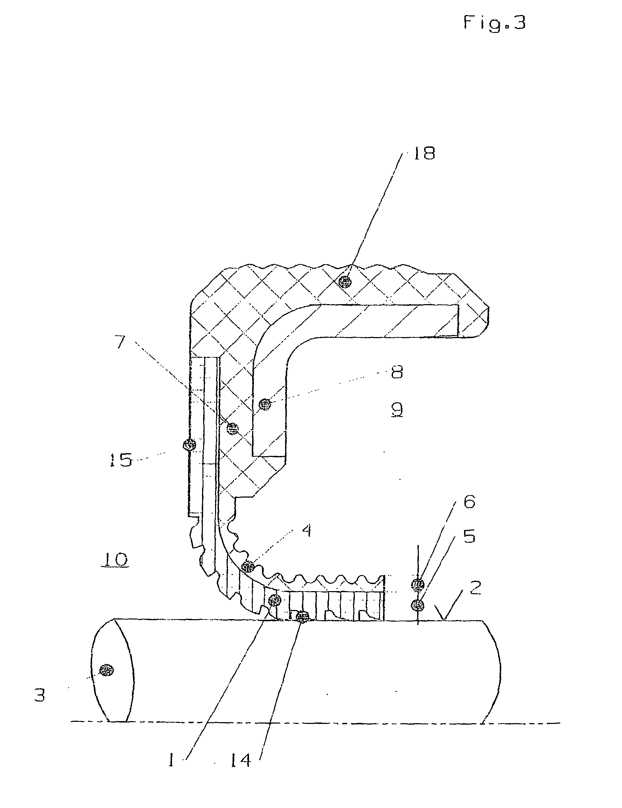

In Figur 3 ist ein drittes Ausführungsbeispiel des erfindungsgemäßen Dichtrings gezeigt, ähnlich dem Ausführungsbeispiel aus Figur 1. Die Versiegelung 4 weist auf der der Dichtmanschette 1 abgewandten Seite eine, im Längsschnitt betrachtet, im Wesentlichen wellenförmige Oberflächenprofilierung 13 auf, die im Vergleich zum Ausführungsbeispiel aus Figur 1 eine verbesserte Wärmeabfuhr aus der Versiegelung 4 durch eine relativ vergrößerte Oberfläche und eine verbesserte Flexibilität der Einheit bestehend aus Dichtmanschette 1 und Versiegelung 4 bewirkt.

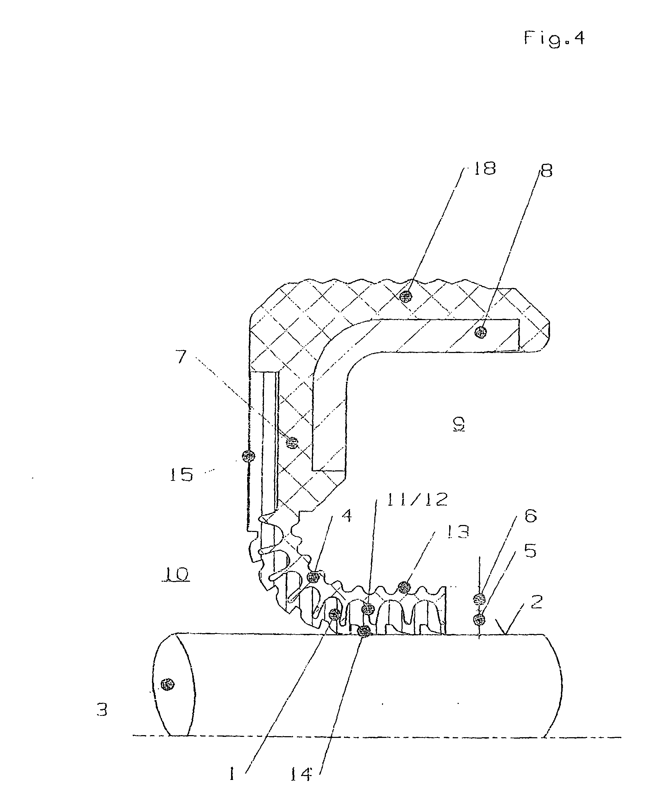

In Figur 4 ist ein viertes Ausführungsbeispiel gezeigt, das die Vorteile der Ausführungsbeispiele aus den Figuren 2 und 3 in sich vereint. Einerseits ist eine sehr dauerhaltbare Verbindung zwischen der Dichtmanschette 1 und der Versiegelung 4 durch die Oberflächenprofilierungen 11, 12 gegeben und andererseits durch die wellenförmige Oberflächenprofilierung 13 eine gute Wärmeabfuhr aus dem Dichtring in Richtung des abzudichtenden Raums 9.

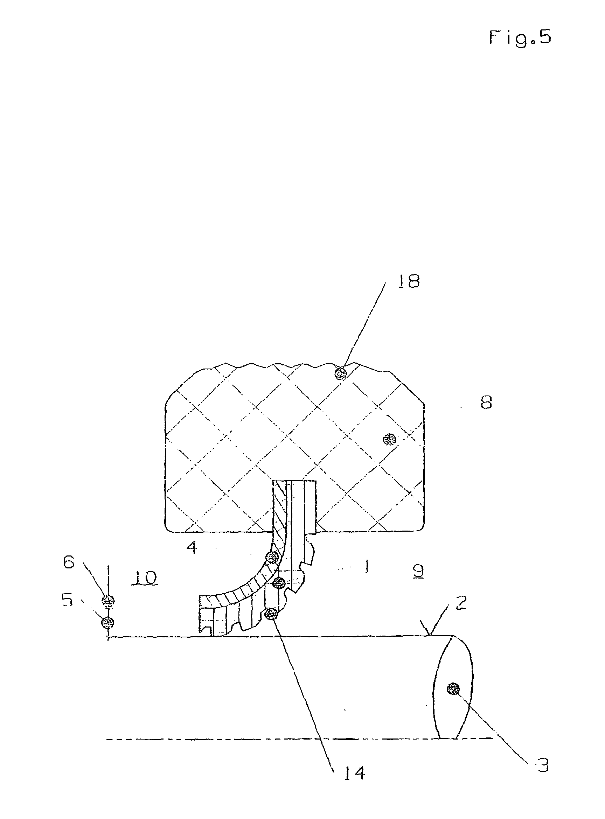

In Figur 5 ist ein weiteres Ausführungsbeispiel des erfindungsgemäßen Dichtrings gezeigt, wobei die Dichtmanschette 1, ebenso wie die Versiegelung 4, entgegen dem abzudichtenden Raum 9 in Richtung der Umgebung 10 vorgewölbt ist. Bei einem solchen Ausführungsbeispiel ist von Vorteil, dass die Versiegelung 4 mit abzudichtendem Medium aus dem abzudichtenden Raum 9 nicht in Berührung kommt. Deshalb können für die Versiegelung 4 Materialien gewählt werden, die die Flexibilität der Dichtmanschette 1 geringstmöglich beeinträchtigen.

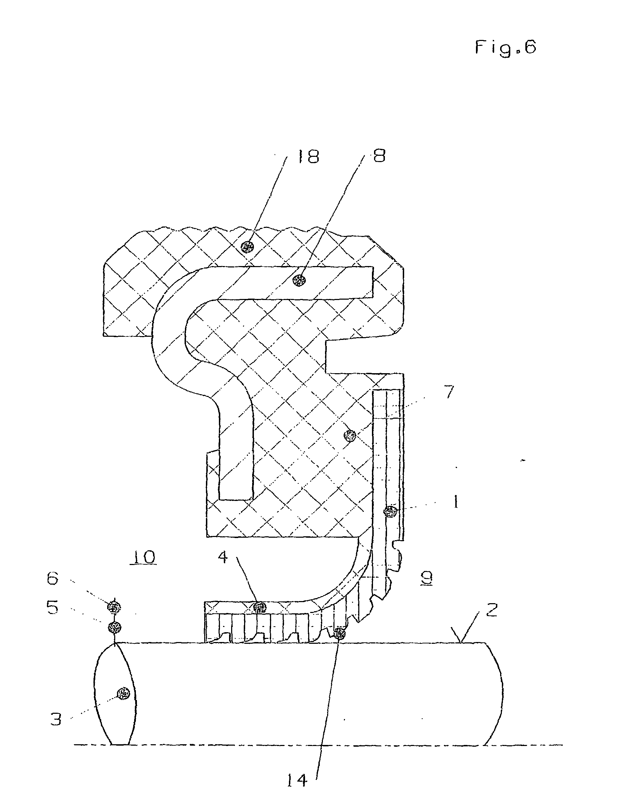

In Figur 6 ist ein sechstes Ausführungsbeispiel eines Dichtrings gezeigt, der ebenfalls, wie der Dichtring aus Figur 5, eine Einheit bestehend aus Dichtmanschette 1 und Versiegelung 4 aufweist, die in Richtung der Umgebung 10 vorgewölbt ist.

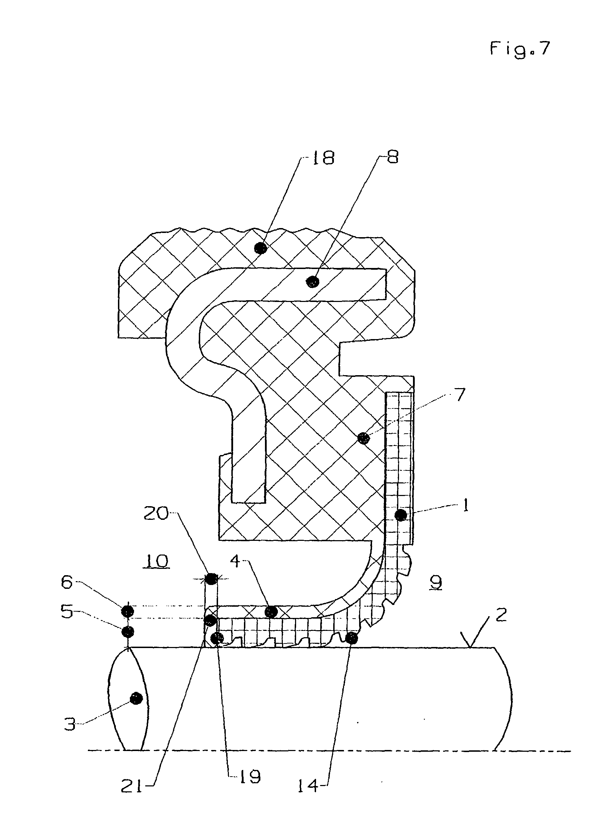

In Figur 7 ist ein siebtes Ausführungsbeispiel eines Dichtrings gezeigt, bei dem die Versiegelung 4 die Stirnseite 19 der in axialer Richtung vorgewölbten Dichtmanschette 1 überdeckt. Die Überdeckung 21 umschließt die abzudichtende Fläche 2 unter radialer Vorspannung anliegend. Die Überdeckung 21 weist eine axiale Erstreckung 20 auf, die der Dicke 6 der Versiegelung 4 entspricht. Eine Diffusion des abzudichtenden Mediums vom abzudichtenden Raum 9, im Wesentlichen achsparallel und parallel zur abzudichtenden Fläche 2 durch die Dichtmanschette 1 hindurch wird dadurch vermieden; sowohl eine Diffusion von abzudichtendem Medium in radialer als auch in axialer Richtung ist dadurch ausgeschlossen.

Die Überdeckung 21 ist nicht nur auf das Ausführungsbeispiel gemäß Figur 7 beschränkt. Auch die Ausführungsbeispiele entsprechend den Figuren 1 bis 6 können eine Versiegelung 4 aufweisen, die die Stirnseite 19 der in axialer Richtung vorgewölbten Dichtmanschette 1 durch die Überdeckung 21 überdeckt und die abzudichtende Fläche 2 des Maschinenelements 3 unter radialer Vorspannung anliegend umschließt. Im hier gezeigten Ausführungsbeispiel gemäß Figur 7 entspricht die axiale Erstreckung 20 der Überdeckung 21 der Dicke 6 der Versiegelung 4.

In den Ausführungsbeispielen aus den Figuren 1 bis 7 weist die Dichtmanschette 1 auf der dem Maschinenelement 3 zugewandten Seite jeweils einen Rückförderdrall 14 auf, der abzudichtendes Medium in Richtung des abzudichtenden Raums 9 zurückfördert.

## Patentansprüche

1. Dichtring, umfassend eine Dichtmanschette (1) aus polymerem Werkstoff, wobei auf der Dichtmanschette (1) auf der der abzudichtenden Fläche eines Maschinenelements (3) abgewandten Seite eine Versiegelung (4) angeordnet ist **dadurch gekennzeichnet, daß** die Dicke (5) der Dichtmanschette (1) höchstens 0,6 mm, die Dicke (6) der Versiegelung (4) 0,005 bis 0,3 mm beträgt sowie maximal halb so groß wie die Dicke (5) der Dichtmanschette (1) ist und das Verhältnis aus der Dicke (5) der Dichtmanschette (1) zur Dicke (6) der Versiegelung (4) 2 bis 120 beträgt.

2. Dichtring nach Anspruch 1, **dadurch gekennzeichnet, dass** die Dicke (6) der Versiegelung (4) 0,01 bis 0,1 mm beträgt.

3. Dichtring nach Anspruch 1, **dadurch gekennzeichnet, dass** das Verhältnis zumindest 10 beträgt.

4. Dichtring nach einem der Ansprüche 1 bis 3, **dadurch gekennzeichnet, daß** die Dichtmanschette (1) aus PTFE-Compound besteht.

5. Dichtring nach einem der Ansprüche 1 bis 3, **dadurch gekennzeichnet, daß** die Versiegelung (4) aus einem Polymeren Werkstoff besteht.

6. Dichtring nach einem der Ansprüche 1 bis 5, **dadurch gekennzeichnet, dass** die Dichtmanschette (1) mittels einer Zwischenschicht (7) mit einem Stützring (8) aus zähhartem Werkstoff verbunden ist.

7. Dichtring nach einem der Ansprüche 1 bis 6, **dadurch gekennzeichnet, dass** die Versiegelung (4) und die Zwischenschicht (7) einstückig ineinander übergehend und materialeinheitlich ausgebildet sind.

8. Dichtring nach einem der Ansprüche 1 bis 7, **dadurch gekennzeichnet, dass** die Dichtmanschette (1) entgegen dem abzudichtenden Raum (9) in Richtung der Umgebung (10) vorgewölbt ist.

9. Dichtring nach einem der Ansprüche 1 bis 8, **dadurch gekennzeichnet, dass** die Dichtmanschette (1) und die Versiegelung (4) auf ihren einander zugewandten Seiten jeweils eine Oberflächenprofilierung (11, 12) aufweisen.

10. Dichtring nach Anspruch 9, **dadurch gekennzeichnet, dass** die Oberflächenprofilierungen (11, 12) von Dichtmanschette (1) und Versiegelung (4) kongruent gestaltet sind.

11. Dichtring nach einem der Ansprüche 1 bis 10, **dadurch gekennzeichnet, dass** die Versiegelung (4) auf der der Dichtmanschette (1) abgewandten Seite eine, im Längsschnitt des Dichtrings betrachtet, im Wesentlichen wellenförmige Oberflächenprofilierung (13) aufweist.

12. Dichtring nach einem der Ansprüche 1 bis 11, **dadurch gekennzeichnet, dass** die Dichtmanschette (1) auf der der abzudichtenden Fläche (2) zugewandten Seite einen in Richtung des abzudichtenden Raums (9) wirksamen Rückförderdrall (14) aufweist.

13. Dichtring nach einem der Ansprüche 1 bis 12, **dadurch gekennzeichnet, dass** die Versiegelung (4) die Stirnseite (19) der in axialer Richtung vorgewölbten Dichtmanschette (1) überdeckt und die abzudichtende Fläche (2) unter radialer Vorspannung anliegend umschließt.

14. Dichtring nach Anspruch 13, **dadurch gekennzeichnet, dass** die axiale Erstreckung (20) der Überdeckung (21) 0,005 bis 0,3 mm beträgt.

15. Dichtring nach einem der Ansprüche 13 oder 14, **dadurch gekennzeichnet, dass** die axiale Erstreckung (20) der Überdeckung (21) der Dicke (6) entspricht.

## Claims

1. Sealing ring, comprising a sealing collar (1) of polymer material, a sealing (4) being arranged on the sealing collar (1), on the side facing away from the surface of a machine element (3) that is to be sealed, **characterized in that** the thickness (5) of the sealing collar (1) is at most 0.6 mm, the thickness (6) of the sealing (4) is 0.005 to 0.3 mm and no more than half the thickness (5) of the sealing collar (1), and the ratio of the thickness (5) of the sealing collar (1) to the thickness (6) of the sealing (4) is 2 to 120.

2. Sealing ring according to Claim 1, **characterized in that** the thickness (6) of the sealing (4) is 0.01 to 0.1 mm.

3. Sealing ring according to Claim 1, **characterized in that** the ratio is at least 10.

4. Sealing ring according to one of Claims 1 to 3, **characterized in that** the sealing collar (1) consists of a PTFE compound.

5. Sealing ring according to one of Claims 1 is 3, **characterized in that** the sealing (4) consists of a polymer material.

6. Sealing ring according to one of Claims 1 to 5, **characterized in that** the sealing collar (1) is connected by means of an intermediate layer (7) to a supporting ring (8) of hard and tough material.

7. Sealing ring according to one of Claims 1 to 6, **characterized in that** the sealing (4) and the intermediate layer (7) are formed such that they merge with each other in one piece and of one material.

8. Sealing ring according to one of Claims 1 to 7, **characterized in that** the sealing collar (1) is pre-curved counter to the space (9) to be sealed, in the direction of the surroundings (10).

9. Sealing ring according to one of Claims 1 to 8, **characterized in that** the sealing collar (1) and the sealing (4) respectively have a surface profiling (11, 12) on their mutually facing sides.

10. Sealing ring according to Claim 9, **characterized in that** the surface profilings (11, 12) of the sealing collar (1) and the sealing (4) are congruently formed.

11. Sealing ring according to one of Claims 1 to 10, **characterized in that** the sealing (4) has on the side facing away from the sealing collar (1) a surface profiling (13) which, when seen in longitudinal section of the sealing ring, is substantially wave-shaped.

12. Sealing ring according to one of Claims 1 to 11, **characterized in that** the sealing collar (1) has on the side facing the surface (2) that is to be sealed a recirculating spiral (14) effective in the direction of the space (9) to be sealed.

13. Sealing ring according to one of Claims 1 to 12, **characterized in that** the sealing (4) covers over the end face (19) of the axially pre-curved sealing collar (1) and encloses the surface (2) that is to be sealed while in contact under radial prestress.

14. Sealing ring according to Claim 13, **characterized in that** the axial extent (20) of the coverage (21) is 0.005 to 0.3 mm.

15. Sealing ring according to either of Claims 13 and 14, **characterized in that** the axial extent (20) of the coverage (21) corresponds to the thickness (6).

## Revendications

1. Joint d'étanchéité comportant une manchette d'étanchéité (1) en matériau polymère, un élément de scellement (4) étant disposé sur la manchette d'étanchéité (1) du côté détourné de la surface à étancher d'un organe de machine (3), **caractérisé en ce que** l'épaisseur (5) de la manchette d'étanchéité (1) est de maximum 0,6 mm, l'épaisseur (6) de l'élément de scellement (4) est de 0,005 à 0,3 mm ainsi que de maximum la moitié de l'épaisseur (5) de la manchette d'étanchéité (1) et le rapport entre l'épaisseur (5) de la manchette d'étanchéité (1) et l'épaisseur (6) de l'élément de scellement (4) est de 2 à 120.

2. Joint d'étanchéité selon la revendication 1, **caractérisé en ce que** l'épaisseur (6) de l'élément de scellement (4) est de 0,01 à 0,1 mm.

3. Joint d'étanchéité selon la revendication 1, **caractérisé en ce que** le rapport est d'au moins 10.

4. Joint d'étanchéité selon l'une quelconque des revendications 1 à 3, **caractérisé en ce que** la manchette d'étanchéité (1) est constituée dans un composé en PTFE.

5. Joint d'étanchéité selon l'une quelconque des revendications 1 à 3, **caractérisé en ce que** l'élément de scellement (4) est constitué dans un matériau polymère.

6. Joint d'étanchéité selon l'une quelconque des revendications 1 à 5, **caractérisé en ce que** la manchette d'étanchéité (1) est reliée à une bague d'appui (8) en matériau dur au moyen d'une couche intermédiaire (7).

7. Joint d'étanchéité selon l'une quelconque des revendications 1 à 6, **caractérisé en ce que** l'élément de scellement (4) et la couche intermédiaire (7) sont conformés d'une seule pièce de façon imbriquée l'un dans l'autre et dans des matériaux identiques.

8. Joint d'étanchéité selon l'une quelconque des revendications 1 à 7, **caractérisé en ce que** la manchette d'étanchéité (1) est précourbée de façon contraire à l'espace (9) à étancher, en direction de l'environnement (10).

9. Joint d'étanchéité selon l'une quelconque des revendications 1 à 8, **caractérisé en ce que** la manchette d'étanchéité (1) et l'élément de scellement (4) présentent chacun un profilage de surface (11, 12) sur leurs côtés tournés l'un vers l'autre.

10. Joint d'étanchéité selon la revendication 9, **caractérisé en ce que** les profilages de surface (11, 12) de la manchette d'étanchéité (1) et de l'élément de scellement (4) sont conformés de façon coïncidente.

11. Joint d'étanchéité selon l'une quelconque des revendications 1 à 10, **caractérisé en ce que** l'élément de scellement (4) présente, du côté détourné de la manchette d'étanchéité (1), un profilage de surface (13) substantiellement ondulé, vu en coupe longitudinale du joint d'étanchéité.

12. Joint d'étanchéité selon l'une quelconque des revendications 1 à 11, **caractérisé en ce que** la manchette d'étanchéité (1) présente, du côté tourné vers la surface (2) à étancher, une inclinaison de refoulement (14) agissant en direction de l'espace (9) à étancher.

13. Joint d'étanchéité selon l'une quelconque des revendications 1 à 12, **caractérisé en ce que** l'élément de scellement (4) recouvre le coté frontal (19) de la manchette d'étanchéité (1) précourbée dans le sens axial et entoure de façon adjacente sous précontrainte radiale la surface (2) à étancher.

14. Joint d'étanchéité selon la revendication 13, **caractérisé en ce que** l'étendue axiale (20) du recouvrement (21) est de 0,005 à 0,3 mm.

15. Joint d'étanchéité selon la revendication 13 ou 14, **caractérisé en ce que** l'étendue axiale (20) du recouvrement (21) correspond à l'épaisseur (6).
